# EUROPÄISCHE PATENTANMELDUNG

(11) **EP 1 455 101 A1**
(43) Veröffentlichungstag der Anmeldung: **08.09.2004**
(21) Anmeldenummer: 03005071.0
(22) Anmeldetag: 06.03.2003
(51) Int. Cl.: F16B 33/06

(54) **Schraube und Verfahren zur Herstellung einer Schutzschicht auf einer Schraube**

(71) Anmelder: SIEMENS AKTIENGESELLSCHAFT, 80333 München (DE)
(72) Erfinder: Böhme, Christian, 45468 Mühlheim an der Ruhr (DE); Link, Thomas Dr., 96215 Lichtenfels (DE); Schrey, Albert, Dr., 47647 Kerken (DE)

(57) **Zusammenfassung**

Die Erfindung betrifft ein Verfahren zur Herstellung einer Schutzschicht auf einer Schraube (1), wobei ein aluminiumhaltiger Hochtemperaturlack (5) auf die Schraube (1) zuerst aufgebracht und anschließend ausgehärtet und bei einer bestimmten Einbrenntemperatur eingebrannt wird. Vor der Montage der Schraube (1) wird das Gewinde (4) zusätzlich geschmiert. Durch dieses Verfahren wird eine Oxidation und letztendlich ein Festfressen der Schraubverbindung vermindert.

## Beschreibung

Die Erfindung betrifft eine gegen erhöhte Fressneigung wirksam geschützte Schraube und ein Verfahren zur Herstellung einer Schutzschicht auf einer Schraube.

Wegen der im Dampfturbinenbau herrschenden hohen Temperaturen von teilweise über 500°C werden für mechanische Verbindungen untereinander hochlegierte Schrauben und Muttern eingesetzt. Diese Schraubverbindungen unterliegen häufig einem Verhalten, das als Fressen bezeichnet wird. Fressen ist eine Art Verschleiß aufgrund von Haftung, der Schäden bei relativ hohen Belastungen hervorruft. Das Festsetzen ineinandergreifender Teile ist häufig das Ergebnis starken Fressens. Für ihre Neigung zum Festsetzen sind besonders verschraubte Teile bekannt. Wenn zwei Flächen unter Belastung zusammengepresst werden, bilden die aufeinander einwirkenden Oberflächen starke Bindungen auf Grund des lokalen hohen Drucks und der durch Bewegung erzeugten Wärme aus. Wenn sich diese Verbindungen an der Grenzfläche lösen, tritt nur ein geringer Schaden auf und die Teile laufen glatt aneinander. Wenn andererseits lokale Brüche in einem der Materialien auftreten, sind große Schäden die Folge. Diese Schäden werden auch als Fressen bezeichnet.

Um dem Fressen entgegen zu wirken, wurden die unbeschichteten Gewinde der Schrauben mit Schmiermittel behandelt, z.B. mit einem aus Öl, Verdicker und Festschmierstoffen zusammengesetzten Schmiermittel. Durch den Einsatz dieses Schmiermittels wird die Reibung zwischen der Schraube und dem Gewindegang reduziert. Die Ölbestandteile verdampfen aber bei einer Erhöhung der Temperatur, was zu einer nachlassenden Schmierwirkung führt und somit bei erneutem Lösen wieder zum Fressen der Schraubverbindung führen kann.

Schraub-, Flansch- und Steckverbindungen für Hochtemperaturanwendungen, die nicht geschmiert werden, unterliegen in verstärktem Maße der Oxidation, was letztendlich zu einem Festfressen der Schraub-, Flansch- und Steckverbindungen beiträgt. Auch die Verwendung von Ölen kann den üblichen Anforderungen an die Schraubverbindungen nicht befriedigend erfüllen, da Öle zum Austrocknen und Verbrennen neigen und somit auch bei ihnen die Gefahr des Austrocknens mit anschließendem Verschleiß der Gewindeoberfläche bei einem erneuten Lösen besteht.

Aus dem Dokument DE 40 05 502 A1 ist bekannt, dass eine mit einer Aluminium enthaltenden Schicht überzogene Schraube wirksam gegen Korrosion und Rosten geschützt werden kann. Die übliche Methode zur Herstellung einer solchen Schicht auf einer Schraube, die Aluminium enthält, besteht darin, die Schrauben in einen Behälter zu bringen, der eine Lösung aus einem 50%-tigen Verdünndungs-Lösungsmittel enthält sowie ein Aluminium enthaltendes Mittel, das aus Aluminiumpulver, Siliconharz, Altyhharz und einem aromatischen Lösungsmittel besteht. Durch Eintauchen der Schrauben in diese Lösung wird eine Beschichtung auf die Schrauben hergestellt. Die Schrauben werden anschließend aus dem Behälter genommen und getrocknet. Diese konventionelle Methode zur Herstellung einer Aluminium enthaltenden Beschichtung auf Schrauben hat jedoch folgende Nachteile: Die Lösung mit dem Aluminium enthaltenden Material verläuft auf der Oberfläche der Schraube während des Trocknungsprozesses, was zu ungleicher Dicke der Beschichtung auf den Schrauben nach dem Trocknen führt.

Bei der Herstellung der Lösung, die ein Aluminium enthaltendes Material enthält, werden allgemein 50 Volumenteile des Verdünnungs-Lösungsmittels, bezogen auf 100 Volumenteile dieser Lösung zugegeben. Dieses Verdünnungs-Lösungsmittel, das der Lösung zugegeben wird bzw. in dieser enthalten ist, verdunstet in die Luft des Arbeitsplatzes und kann die Bedienungsperson schädigen, wenn sie diese Dämpfe einatmet.

Die in die Lösung eingetauchten Schrauben neigen dazu, aneinander zu kleben während des Eintauch- und Beschichtungsprozesses. Deshalb sind einige der Schrauben nicht ausreichend mit dem Aluminium enthaltenen Mittel beschichtet und können nutzlos werden, da die Schrauben aneinander kleben oder haften.

In dem Dokument DE 40 05 502 A1 wird ein Verfahren zur Herstellung einer Schutzschicht auf einer Schraube beschrieben. Dabei wird ein Lösungsmittel, Wasser und ein Aluminium enthaltendes Mittel in einem ersten Behälter gemischt, um eine elektrolytische Lösung zu erhalten. In einem zweiten Behälter wird eine Vielzahl von Schrauben eingebracht. Der zweite Behälter wird in den ersten Behälter eingebracht, so dass die Schrauben in die elektrolytische Lösung eingetaucht werden. Dadurch entsteht eine Aluminium enthaltene Schicht auf jeder Schraube durch Elektrolyse. Der zweite Behälter wird während der Elektrolyse geschwenkt. Anschließend werden die Schrauben mit Wasser gewaschen, um die Lösungsmittelreste, die an den Schrauben haften, zu entfernen.

Aufgabe der vorliegenden Erfindung ist es, eine Schraubverbindung, die eine Schraube und ein Gegengewinde aufweist, anzugeben, die eine geringe Fressneigung aufweist sowie ein Verfahren zur Herstellung einer Schutzschicht auf einer Schraube oder auf einem Gegengewinde bereitzustellen.

Die auf die Schraubverbindung gerichtete Aufgabe wird gelöst durch eine Schraube mit einem aluminiumhaltigen Hochtemperaturlack auf dem Gewinde.

Die auf die Schraubverbindung gerichtete Aufgabe wird ebenfalls gelöst durch ein Gegengewinde, auf das ein aluminiumhaltiger Hochtemperaturlack aufgebracht ist.

Durch den Einsatz von einem aluminiumhaltigen Hochtemperaturlack gewinnt man den Vorteil, dass das Fressen der Schrauben deutlich vermindert wird.

In einer vorteilhaften Ausgestaltung wird der untere Teil des Gewindes mit dem aluminiumhaltigen Hochtemperaturlack beschichtet. Dadurch wird gezielt der Bereich der Schraube bzw. des Gewindes mit einer Schutzschicht versehen, der im Anwendungsfall besonders belastet wird.

Die auf das Verfahren gerichtete Aufgabe wird dadurch gelöst, indem ein aluminiumhaltiger Hochtemperaturlack auf die Schraube aufgetragen und anschließend ausgehärtet und eingebrannt wird. Der Vorteil dieser Lösung besteht insbesondere darin, dass das Verfahren sehr einfach zu handhaben ist. Das Verfahren bedarf keiner besonderen Sicherheitsvorkehrungen, so dass es auch auf einer Baustelle während einer Revision, Reparatur oder Inbetriebnahme angewandt werden kann.

In einer vorteilhaften Ausgestaltung wird der aluminiumhaltige Hochtemperaturlack bei Raumtemperatur aufgebracht. Dadurch ist eine größere Einsatzmöglichkeit des Verfahrens möglich, da keine besondere Vorkehrungen für die Prozesstemperatur während der Beschichtung der Schraube getroffen werden müssen.

In einer weiteren vorteilhaften Ausgestaltung wird der aluminiumhaltige Hochtemperaturlack in zwei dünnen Schichten aufgebracht. Dadurch entsteht der Vorteil, dass die Fressneigung der Schraube durch eine zweite Schicht aus dem aluminiumhaltigen Hochtemperaturlackes vermindert wird.

In einer weiteren vorteilhaften Ausgestaltung wird das Gewinde nach dem Einbrennen des aluminiumhaltigen Hochtemperaturlackes mit einem Schmiermittel geschmiert. Dadurch erhöht sich die Schmierwirkung des Gewindes und die Gefahr des Fressens der Schraube wird zusätzlich vermieden.

Die beschichteten Schrauben können in Strömungsmaschinen eingesetzt werden. Insbesondere können die beschichteten Schrauben in Dampfturbinen bzw. in Gasturbinen eingesetzt werden.

Nachfolgend wird die Erfindung anhand einer Zeichnung näher erläutert. Darin zeigt:

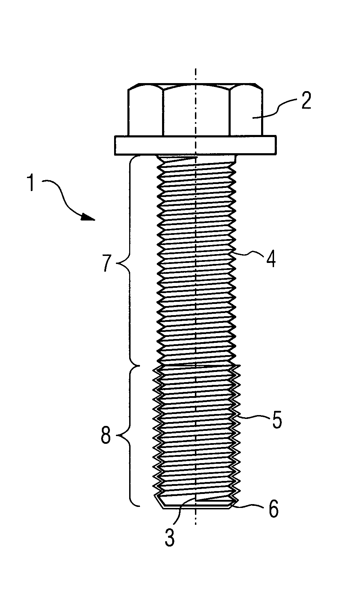

- Fig. 1: einen Längsschnitt durch eine beschichtete Schraube.

In Figur 1 ist der Längsschnitt einer beschichteten Schraube 1 zu sehen. Die Schraube 1 weist einen Kopf 2 und entlang der Längsachse 3 ein Gewinde 4 auf. Das Gewinde 4 erstreckt sich in diesem Ausführungsbeispiel vom Kopf 2 bis an den Schraubenanfang 6. Die Schraube 1 weist einen oberen Teil 7 und einen unteren Teil 8 entlang der Längsachse 3 auf, wobei die Trennung zwischen oberen 7 und unteren 8 Teil der Schraube 1 variabel ist. Andere Ausführungsformen der Schraube 1, wie z.B. ein in Längsachse 3 lediglich teilweise aufgebrachtes Gewinde 4, sind einsetzbar. Die Schrauben können z.B. aus 12%igem Chromstahl bestehen.

Die Schraube 1 kann unter anderem im Dampfturbinen- oder Gasturbinenbau eingesetzt werden.

Die Schraube 1 ist mit einem aluminiumhaltigen Hochtemperaturlack 5 auf dem gesamten Gewinde 4 versehen. Der aluminiumhaltige Hochtemperaturlack muss nicht auf das gesamte Gewinde 4 aufgebracht werden, für manche Anwendungen genügt es den unteren Teil 8 des Gewindes mit dem aluminiumhaltigen Hochtemperaturlack 5 zu versehen. Zudem kann die Schraube 1 aus hochlegierten Materialen bestehen. Der aluminiumhaltige Hochtemperaturlack 5 kann auf dem Gegengewinde aufgebracht werden. Der gewünschte Vorteil einer geringeren Fressneigung ist dadurch nach wie vor gegeben.

Das Verfahren ist in der Handhabung einfach. Ein aluminiumhaltiger Hochtemperaturlack wird bei Raumtemperatur in zwei dünnen Schichten aufgebracht. Der aluminiumhaltige Hochtemperaturlack kann ein handelsüblicher aluminiumhaltiger Hochtemperaturlack sein. Das Aufbringen der beiden dünnen Schichten geschieht zeitlich hintereinander unter einem zeitlichen Versatz. Die beiden dünnen Schichten werden anschließend getrocknet und ausgehärtet. Das Trocknen und Aushärten kann unter Luftatmosphäre erfolgen. Anschließend kann der aluminiumhaltige Hochtemperaturlack eingebrannt werden. Die Einbrenntemperaturen können zwischen 160°C - 750°C betragen. Bevor die Schraube 1 eingesetzt wird, wird das Gewinde 4 zusätzlich geschmiert. Hierzu wird ein handelsübliches Schmiermittel verwendet. Die Fressneigung der Schrauben wird durch dieses Verfahren deutlich vermindert. Durch diese verringerte Fressneigung der Schrauben können erhebliche Kosten eingespart werden.

## Patentansprüche

1. Schraube (1) mit aluminiumhaltigem Hochtemperaturlack (5) auf dem Gewinde.

2. Gegengewinde mit aluminiumhaltigem Hochtemperaturlack (5).

3. Schraube (1) nach Anspruch 1,
mit einem unteren Gewindebereich, wobei der aluminiumhaltige Hochtemperaturlack (5) nur auf dem unteren Gewindebereich aufgebracht ist.

4. Verfahren zur Beschichtung einer Schraube (1), die ein Gewinde (4) aufweist,
**dadurch gekennzeichnet, dass**
die Schraube (1) mit einem aluminiumhaltigen Hochtemperaturlack (5) beschichtet und anschließend der aluminiumhaltige Hochtemperaturlack (5) ausgehärtet und eingebrannt wird.

5. Verfahren nach Anspruch 3,
**dadurch gekennzeichnet, dass**
die Schraube (1) mit einem aluminiumhaltige Hochtemperaturlack (5) bei Raumtemperatur beschichtet wird.

6. Verfahren nach Anspruch 3 oder 4,
**dadurch gekennzeichnet, dass**
der aluminiumhaltige Hochtemperaturlack (5) in zwei dünnen Schichten aufgebracht wird.

7. Verfahren nach einem der Ansprüche 3 bis 5,
**dadurch gekennzeichnet, dass**
das Gewinde (4) nach dem Einbrennen des aluminiumhaltigen Hochtemperaturlackes (5) mit einem Schmiermittel geschmiert wird.

8. Dampfturbine mit Schrauben nach einem der Ansprüche 1 bis 6.

9. Gasturbine mit Schrauben nach einem der Ansprüche 1 bis 6.

10. Gehäuseschrauben für Dampf- oder Gasturbinen nach einem der Ansprüche 1 bis 6.
